# EUROPÄISCHE PATENTSCHRIFT

(11) **EP 0 955 106 B1**
(45) Veröffentlichungstag und Bekanntmachung des Hinweises auf die Patenterteilung: **31.07.2002**
(21) Anmeldenummer: 98810404.8
(22) Anmeldetag: 06.05.1998
(51) Int. Cl.: B21D 24/16, B29C 51/46

(54) **Vorrichtung zum Erfassen der Poren- oder Rissbildung an einer Folie**
Device for detecting the formation of pores or fissures in a foil
Dispositif pour détecter la formation des pores ou fissures dans une feuille

(43) Veröffentlichungstag der Anmeldung: 10.11.1999
(73) Patentinhaber: Alcan Technology & Management AG, 8212 Neuhausen am Rheinfall (CH)
(72) Erfinder: Oster, Heinz, 8245 Feuerthalen (CH); Zeiter, Patrik, 8044 Zürich (CH)

(56) Entgegenhaltungen:
- EP-A- 0 374 735
- EP-A- 0 720 906

## Beschreibung

Die Erfindung betrifft eine aus der Praxis bekannte Vorrichtung zum kontinuierlichen Erfassen der Poren- oder Rissbildung an einer Folie während ihrer Verformung, mit einer Halteeinrichtung für die Folie, einer Einrichtung zur gesteuerten Verformung der Folie, mindestens einer auf einer Seite der Folie angeordneten Lichtquelle, mindestens einem auf der anderen Seite der Folie angeordneten Lichtsensor zur Messung des Lichtdurchganges durch die Folie, und einer Einrichtung zur kontinuierlichen Registrierung der von den Lichtsensoren gemessenen Lichtintensität.

Zur Prüfung folienförmiger Werkstoffe hinsichtlich ihrer Neigung zur Bildung von Poren oder Rissen bei der Verformung wird beispielsweise die Multi-Axiale-Dehnungsprüfung (MAD) eingesetzt. Bei diesem Prüfverfahren handelt es sich um einen Streckzieh-Versuch mit einem zylindrischen Teflonstempel mit einem Durchmesser von 27 mm und einer Matrize mit einem Durchmesser von 30 mm. Durch Aufzeichnung des Kraft-Weg-Verlaufs während der Umformung wird die Bruchtiefe als Mass für das Umformvermögen der geprüften Folie ermittelt. Ergänzend zu dieser Prüfmethode wird in speziellen Fällen noch eine porenfreie Tiefe ermittelt. Hierzu werden in der für den MAD-Test vorgesehenen Vorrichtung durch Verformung Näpfe mit steigender Tiefe hergestellt und durch anschliessende visuelle Prüfung der Näpfe über einer Lichtquelle wird das Auftreten der ersten Poren ermittelt. Bei der Untersuchung des Verformungsverhaltens unterschiedlicher Folienwerkstoffe wurde festgestellt, dass nicht in jedem Fall eine eindeutige Korrelation zwischen Bruchtiefe und porenfreier Tiefe besteht.

Es ist weiter bekannt, bei Produktionsanlagen zur Herstellung von Blisterpackungen und anderen Folienverpackungen mit in die Folie eingeformten Vertiefungen nach der Umformstation einen die verformte Folie auf Lichtdurchlässigkeit prüfenden Porendetektor anzuordnen.

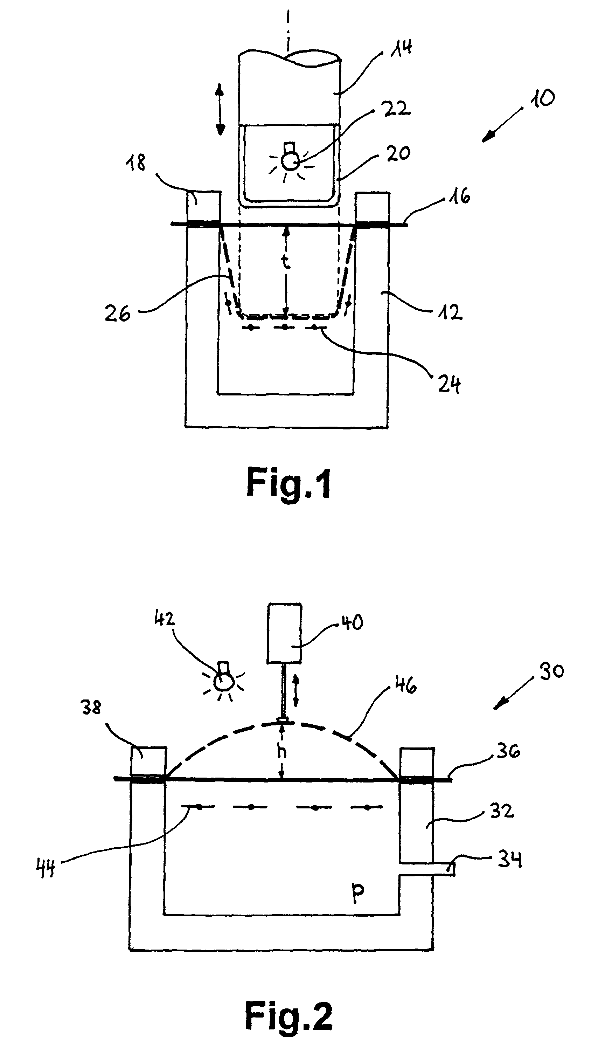

Zum Stand der Technik gehört auch eine in Fig. 2 dargestellte Vorrichtung der eingangs genannten Art, bei der die Einrichtung zur gesteuerten Verformung der Folie eine Druckgaseinrichtung zum Beaufschlagen einer Seite der Folie mit einem zeitlich zunehmenden Gasdruck und eine Messeinrichtung zur kontinuierlichen Bestimmung der Verformung umfasst. Mit dieser Vorrichtung ist es zwar möglich, Poren oder Risse unmittelbar bei ihrer Entstehung während der Verformung der Folie zu erfassen. Ein wesentlicher Nachteil dieses Porendetektors liegt jedoch darin, dass wegen der bei der Gasdruckumformung praktisch fehlenden Reibung das Fliessverhalten der Folie während ihrer Verformung vom realen Fliessverhalten einer in der Praxis mit einem Formstempel umgeformten Folie stark abweicht. Demzufolge sind die mit der Gasdruckmethode gewonnenen Erkenntnisse zur Poren- und Rissbildung einer Folie während ihrer Verformung nur bedingt auf die praxisübliche Stempelumformung übertragbar.

Der Erfindung liegt deshalb die Aufgabe zugrunde, eine Vorrichtung der eingangs genannten Art zu schaffen, welche die Nachteile der bekannten Porendetektoren nicht aufweist und die zu einem Umformverhalten der Folie führt, welches dem realen Umformverhalten in der Praxis weitgehend entspricht.

Zur erfindungsgemässen Lösung der Aufgabe führt, dass die eingangs genannte Einrichtung zur gesteuerten Verformung der Folie einen auf einer Seite angeordneten, mit einem Antrieb wirkverbundenen Formstempel zum Verformen der Folie umfasst, wobei die Lichtquelle oder die Lichtsensoren in den Formstempel integriert sind.

Durch die erfindungsgemässe Anordnung der Lichtquelle oder der Lichtsensoren innerhalb des Formstempels kann der Umformvorgang der praxisüblichen Stempelumformung nachgebildet werden.

Die erfindungsgemässe Vorrichtung bietet gegenüber den Vorrichtungen nach dem Stand der Technik wesentliche Vorteile:
- durch die während der Verformung durchgeführte Online-Prüfung der Lichtdurchlässigkeit der Folie kann das Auftreten erster Poren oder Risse wie auch das diesbezügliche Verhalten der Folie bei fortgesetzter Verformung auf einfache Weise ohne visuelle Prüfung einer Reihe zur Bestimmung der porenfreien Tiefe auf unterschiedliche Tiefe verformter Näpfe praxisnah ermittelt werden.
- die Poren werden unmittelbar während ihrer Entstehung erfasst, d.h. zu einem Zeitpunkt, in dem die dem Umformvorgang unterworfene Folie unter Zugspannung steht. Bei der üblichen Messung der porenfreien Tiefe ist diese Früherkennung von Poren nicht möglich, da diese sich bei fehlender Zugspannung derart verkleinern, dass sie visuell nicht mehr feststellbar sind. Gleiches gilt für die einer Umformstation nachgeordneten Porendetektoren.

Bei einer bevorzugten Ausführungsform der erfindungsgemässen Vorrichtung besteht hierbei zumindest der formgebende Oberflächenbereich des Formstempels aus einem gleitfähigen lichtdurchlässigen Werkstoff, insbesondere aus Teflon, wobei die Lichtdurchlässigkeit der Formstempeloberfläche durch den Einsatz eines porösen Werkstoffes oder durch Mikroperforation noch erhöht sein kann.

Der gleitfähige Werkstoff kann als Beschichtung auf den Formstempel aufgebracht sein. Bei einer besonders zweckmässigen Ausgestaltung ist der Formstempel jedoch als dünnwandiger Hohlkörper mit lichtdurchlässiger Wand ausgebildet.

Bei einer besonders bevorzugten Ausführungsvariante der erfindungsgemässen Vorrichtung ist dem Formstempel eine als schwarze Kammer dienende Matrize zugeordnet und die Lichtsensoren sind in der Matrize angeordnet.

Die erfindungsgemässe Vorrichtung kann nicht nur für die Materialprüfung eingesetzt werden, sondern eignet sich auch für den Einsatz in industriellen Produktionsanlagen für die Herstellung von Folien mit Vertiefungen, beispielsweise Blisterpackungen.

Die erfindungsgemässe Vorrichtung kann den heute üblichen, nach der Umformstation liegenden Porendetektor ergänzen oder ersetzen. Da die mit einer Lichtquelle versehenen Formstempel bei Anordnung von Lichtsensoren in der Matrize einer Umformstation gleichzeitig zur Herstellung von Vertiefungen, z.B. bei der Blisterherstellung, und auch als Porendetektoren eingesetzt werden können, ist eine optimale Steuerung des Umformprozesses möglich.

Ein besonderer Anwendungsbereich des erfindungsgemässen Verfahrens bzw. der Vorrichtung liegt bei der Prüfung von lichtundurchlässigen Folien, insbesondere Folienlaminate aus Kunststoff und Metall oder Metallfolien, vorzugsweise Folienlaminate mit einem Aluminiumanteil oder Aluminiumfolien.

Weitere Einzelheiten der Erfindung ergeben sich aus der nachfolgenden Beschreibung eines bevorzugten Ausführungsbeispiels im Vergleich zum Stand der Technik sowie anhand der Zeichnung; diese zeigt schematisch in
- Fig. 1 eine teilweise geschnittene Seitenansicht eines Porendetektors mit Formstempel und Matrize;
- Fig. 2 eine teilweise geschnittene Seitenansicht eines mit Druckluft betriebenen Porendetektors nach dem Stand der Technik.

Ein in Fig. 1 dargestellter Porendetektor 10 weist eine als schwarze Kammer dienende Matrize 12 und einen mit der Matrize zusammenarbeitenden Formstempel 14 auf. Ein Niederhalter 18 dient zur Fixierung einer auf dem Rand der Matrize 12 aufliegenden Folie 16.

Der formgebende Teil des Formstempels 14 ist als Hohlkörper mit einer für Licht durchlässigen Wand 20 ausgestaltet. Im Innern des Formstempels 14 befindet sich eine Lichtquelle 22. In der Matrize 12 sind Lichtsensoren 24 angeordnet.

Als Beispiel einer zu prüfenden Folie 16 sei hier ein zur Herstellung von Blisterverpackungen eingesetztes Laminat aus einer beidseitig mit einer Kunststoffolie beplankten Aluminiumfolie mit folgendem Aufbau erwähnt:
- Kunststoffolie:: orientiertes Polyamid, Dicke 25µm
Aluminium, Dicke 45µm
PVC, Dicke 60µm

Der formgebende Teil des Formstempels 14 ist beispielsweise aus einem bis auf die verbleibende Wand 20 ausgefrästen Stempel aus Teflon gefertigt. Als spezielle, gut einzubauende Lichtquelle dient beispielsweise eine LED. Die Anzahl und Anordnung der Lichtsensoren 24 in der Matrize 12 richtet sich nach den an die Prüfmethode gestellten Anforderungen. Beispielsweise können zwölf Lichtsensoren so angeordnet sein, dass sie dem stärksten Verformungsbereich eines während der Prüfung aus der Folie 16 herausgeformten Napfes 26 gegenüberliegen.

Die Funktionsweise des Porendetektors 10 wird nachfolgend kurz erläutert.

Eine Folie 16 wird auf den Rand der Matrize 12 aufgelegt und mittels des Niederhalters 18 auf der Matrize 12 fixiert. Der Formstempel 16 mit integrierter Lichtquelle 22 wird auf die Folie 16 aufgesetzt und über einen nicht dargestellten Antrieb in die Matrize 12 hineinbewegt. Hierbei wird der Napf 26 kontinuierlich aus der Folie 16 herausgeformt. Sobald Poren oder Risse an kritischen Stellen der Folie entstehen, tritt an diesen Stellen von der Lichtquelle 22 erzeugtes Licht durch die Folie 16 hindurch und in die Matrize 12 ein, wo die Intensität der auf die Lichtsensoren 24 auftreffenden Lichtstrahlen gemessen werden. Der Vortrieb des Formstempels 14 bzw. die Tiefe t des bei der Verformung der Folie 16 gebildeten Napfes 26 wird über den Antrieb des Stempels erfasst und in elektrische Signale umgewandelt, die zusammen mit den durch die Lichtsensoren 24 erzeugten elektrischen Signalen in bekannter Art einer in der Zeichnung nicht wiedergegebenen Registriereinheit zugeführt werden. Durch kontinuierliche Registrierung der vom Lichtsensor 24 gemessenen Lichtintensität in Abhängigkeit von der durch die Tiefe t des während des Umformvorganges aus der Folie 16 gebildeten Napfes 26 charakterisierten Verformung kann die Bildung von Poren oder Rissen unmittelbar während ihrer Entstehung ermittelt werden. So zeigt zum Beispiel das erste von den Lichtsensoren 24 gesendete Signal das Auftreten der ersten Pore. Durch entsprechende Anpassung der Software kann die Porenbildung in Abhängigkeit vom Verformungszustand der Folie in der zur Auswertung gewünschten Art dargestellt werden.

Fig. 2 zeigt einen Porendetektor 30 nach dem Stand der Technik mit einer Druckkammer 32 mit Luftdruckanschluss 34. Ein Niederhalter 38 dient zur Fixierung einer zu prüfenden Folie 36 auf dem Rand der Druckkammer 32. Ausserhalb der Druckkammer 32 ist ein Wegaufnehmer 40 zur Auflage auf der Folie 36 angeordnet. Ebenfalls ausserhalb der Druckkammer 32 und oberhalb der Folie 36 befindet sich eine Lichtquelle 42. Im Innern der Druckkammer 32 sind Lichtsensoren 44 angeordnet.

Die Funktionsweise des Porendetektors 30 wird nachfolgend kurz erläutert.

Durch kontinuierliche Erhöhung des Gasdruckes p innerhalb der Druckkammer 32 wird die mittels des Niederhalters 38 fest eingespannte Folie 36 unter Bildung einer Wölbung gedehnt. Die Wölbhöhe h wird über den Wegaufnehmer 40 gemessen und in elektrische Signale umgewandelt. Sobald sich in der Folie 36 Poren oder Risse bilden, tritt von der Lichtquelle 42 ausgehendes Licht durch die Folie 36 hindurch in die Druckkammer 32 ein und trifft dort auf die Lichtsensoren 44, welche der gemessenen Lichtintensität entsprechende elektrische Signale erzeugen. Die Registrierung und Auswertung der von den Lichtsensoren gemessenen Lichtintensität in Abhängigkeit von der über die Wölbhöhe h ermittelten Dehnung der Folie erfolgt in gleicher Weise wie in dem oben beschriebenen Porendetektor mit Matrize und Formstempel. Wie bereits erwähnt, liegt ein wesentlicher Nachteil dieses Porendetektors nach dem Stand der Technik darin, dass der Umformvorgang von der Verformung unter üblichen Praxisbedingungen zu stark abweicht, so dass qualitative Aussagen über das Auftreten von Poren oder Rissen unter Praxisbedingungen kaum möglich sind.

Der in Fig. 1 dargestellte Porendetektor kann in alleinstehenden Prüfeinrichtungen zur Qualitätskontrolle oder bei der Entwicklung von Folienlaminaten eingesetzt werden. Daneben ist es auch möglich, Porendetektoren direkt in eine Produktionsanlage zur Herstellung von beispielsweise Blisterverpackungen zu integrieren, da der Formstempel mit integrierter Lichtquelle gleichzeitig als Umformwerkzeug und Porendetektor dient. Auf diese Weise lassen sich die Betriebsparameter der für die Blisterherstellung eingesetzten Umformeinrichtung optimal einstellen.

Obschon der in Fig.1 dargestellte Porendetektor einen Niederhalter aufweist und demzufolge die Verformung der Folie durch Streckziehen erfolgt, sind Ausführungsformen möglich, mit denen die Folie durch andere Verformungsoperationen wie z.B. durch Tiefziehen verformt wird.

## Patentansprüche

1. Vorrichtung zum kontinuierlichen Erfassen der Poren- oder Rissbildung an einer Folie (16) während ihrer Verformung, mit einer Halteeinrichtung (12, 18) für die Folie (16), einer Einrichtung (14) zur gesteuerten Verformung der Folie (16), mindestens einer auf einer Seite der Folie (16) angeordneten Lichtquelle (22), mindestens einem auf der anderen Seite der Folie (16) angeordneten Lichtsensor (24) zur Messung des Lichtdurchganges durch die Folie (16), und einer Einrichtung zur kontinuierlichen Registrierung der von den Lichtsensoren (24) gemessenen Lichtintensität,
**dadurch gekennzeichnet, dass**
die Einrichtung zur gesteuerten Verformung der Folie (16) einen auf einer Seite der Folie (16) angeordneten, mit einem Antrieb wirkverbundenen Formstempel (14) zum Verformen der Folie (16) umfasst, wobei die Lichtquelle (22) oder die Lichtsensoren (24) in den Formstempel (14) integriert sind.

2. Vorrichtung nach Anspruch 1, **dadurch gekennzeichnet, dass** die Lichtquelle (22) in den Formstempel (14) integriert ist und zumindest der formgebende Oberflächenbereich des Formstempels (14) aus einem gleitfähigen lichtdurchlässigen Werkstoff, insbesondere aus Teflon, besteht.

3. Vorrichtung nach Anspruch 2, **dadurch gekennzeichnet, dass** die Lichtdurchlässigkeit der Formstempeloberfläche durch den Einsatz eines porösen Werkstoffs oder durch Mikroperforation erhöht ist.

4. Vorrichtung nach Anspruch 2 oder 3, **dadurch gekennzeichnet, dass** der gleitfähige Werkstoff als Beschichtung auf den Formstempel (14) aufgebracht ist.

5. Vorrichtung nach Anspruch 2 oder 3,**dadurch gekennzeichnet, dass** der Formstempel (14) als dünnwandiger Hohlkörper mit lichtdurchlässiger Wand (20) ausgebildet ist.

6. Vorrichtung nach einem der Ansprüche 1 bis 5, **dadurch gekennzeichnet, dass** dem Formstempel (14) eine Matrize (12) zugeordnet ist und die Lichtsensoren (24) in der Matrize (12) angeordnet sind.

7. Verwendung der Vorrichtung nach einem der Ansprüche 1 bis 6 zur Steuerung des Umformprozesses bei der Herstellung von Vertiefungen in Folien, insbesondere bei der Herstellung von Blisterpackungen.

8. Verwendung der Vorrichtung nach einem der Ansprüche 1 bis 6 zur Prüfung von lichtundurchlässigen Folien, insbesondere Folienlaminate aus Kunststoff und Metall oder Metallfolien, vorzugsweise Folienlaminate mit einem Aluminiumanteil oder Aluminiumfolien.

## Claims

1. Device for continuously detecting pinholes or tears in a foil (16) during deformation of the foil (16), having a device (12, 18) for clamping the foil (16), a device (14) for controlled deformation of the foil (16), at least one light source (22) situated on one side of the foil (16), at least one light sensor (24) on the other side of the foil (16) for measuring the light penetrating the foil (16), and a device for continuously registering the light intensity measured by the light sensors (24)
**characterised in that**,
the device for controlled deformation of the foil (16) comprises a punch (14) which is situated on one side of the foil (16) and is connected to a drive mechanism for deforming the foil (16), the light source (22) or light sensors (24) being integrated in the punch (14).

2. Device according to claim 1, **characterised in that** the light source (22) is integrated in the punch (14) and at least the shape-forming surface area of the punch (14) is of an easy-slide, light-permeable material, in particular Teflon.

3. Device according to claim 2, **characterised in that** the light permeability of the punch surface is increased by use of a porous material or by micro-perforations.

4. Device according to claim 2 or 3, **characterised in that** the easy-slide material is deposited as a coating on the punch (14).

5. Device according to claim 2 or 3, **characterised in that** the punch (14) is in the form of a thin-walled hollow body with light-permeable wall (20).

6. Device according to one of the claims 1 to 5, **characterised in that** the punch (14) faces a die (12) and the light sensors (24) are situated in the die (12).

7. Use of the device according to one of the claims 1 to 6 to control the deforming process when creating depressions in foils, in particular when manufacturing blister packs.

8. Use of the device according to one of the claims 1 to 6 for testing foils that are non-permeable to light, in particular foil laminates of plastic and metal or metal foils, preferably foil laminates part of which is aluminium or aluminium foils.

## Revendications

1. Dispositif de détection en continu de la formation de pores ou de crevasses sur un film (16) pendant sa déformation, avec un dispositif d'arrêt (12, 18) pour le film (16), un dispositif (14) de déformation commandée du film (16), au moins une source de lumière (22) placée d'un côté du film (16), au moins un capteur de lumière (24) placé de l'autre du film (16), pour la mesure du passage de la lumière à travers le film (16) et un dispositif d'enregistrement en continu de l'intensité lumineuse mesurée par les capteurs de lumière (24), **caractérisé en ce que** le dispositif de déformation commandée du film (16), comprend un poinçon (14) pour déformer le film, disposé d'un côté du film (16), en liaison d'interaction avec un mécanisme d'entraînement, la source de lumière (22) ou les capteurs de lumière (24) étant intégrés dans le poinçon (14).

2. Dispositif suivant la revendication 1, **caractérisé en ce que** la source de lumière (22) est intégrée dans le poinçon (14) et au moins la zone de surface définissant la forme du poinçon (14) est constituée d'un matériau glissant perméable à la lumière, en particulier de Téflon.

3. Dispositif suivant la revendication 2, **caractérisé en ce que** la perméabilité à la lumière de la surface du poinçon est augmentée par l'utilisation d'un matériau poreux ou par microperforation.

4. Dispositif suivant la revendication 2 ou 3, **caractérisé en ce que** le matériau glissant est appliqué comme revêtement sur le poinçon (14).

5. Dispositif suivant la revendication 2 ou 3, **caractérisé en ce que** le poinçon (14) est formé comme corps creux à parois minces perméables à la lumière (20).

6. Dispositif suivant l'une des revendications 1 à 5, **caractérisé en ce qu'**une matrice (12) correspond au poinçon (14) et les capteurs de lumière (24) sont disposés dans la matrice (12).

7. Utilisation du dispositif suivant l'une des revendications 1 à 6 pour la commande d'un processus de déformation lors de la fabrication d'alvéoles dans des films, en particulier lors de la fabrication d'emballages blisters.

8. Utilisation du dispositif suivant l'une des revendications 1 à 6 pour contrôler des films imperméables à la lumière, en particulier des films laminés en matière plastique et métal ou des films métalliques, de préférence des films laminés comprenant de l'aluminium ou des films d'aluminium.
